(19) **Europäisches Patentamt / European Patent Office / Office européen des brevets**

(11) **EP 3 156 858 B1**

(12) **EUROPEAN PATENT SPECIFICATION**

(45) Date of publication and mention
of the grant of the patent:
**04.07.2018 Bulletin 2018/27**

(51) Int Cl.:
***G05B 15/02*** (2006.01)

(21) Application number: **15190248.3**

(22) Date of filing: **16.10.2015**

(54) **COMMISSIONING OF SENSORS AND ACTUATORS IN BUILDINGS**

INBETRIEBNAHME VON SENSOREN UND AKTOREN IN GEBÄUDEN

MISE EN SERVICE DE SENSORS ET D' ACTUATEURS DANS DES BÂTIMENTS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.04.2017 Bulletin 2017/16**

(73) Proprietor: **Siemens Schweiz AG
8047 Zürich (CH)**

(72) Inventors:
• **Copley, Jonathan Miles
6300 Zug (CH)**

• **Fiddian-Green, Andrew
6330 Cham (CH)**
• **Liesenfeld, Thomas
6330 Cham (CH)**
• **Varekamp, Robin Adam
8808 Pfäffikon SZ (CH)**

(74) Representative: **Maier, Daniel Oliver
Siemens AG
Postfach 22 16 34
80506 München (DE)**

(56) References cited:
**US-A1- 2006 206 291     US-A1- 2008 231 437
US-A1- 2015 022 374**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

# Description

The present disclosure relates to commissioning a residential, commercial and / or industrial building or facility. More particularly, the present disclosure focuses on a building having a plurality of actuators and a plurality of sensors. To commission the building, the signals obtained from the sensors are correlated with the positions of the actuators.

Residential, commercial and / or industrial buildings commonly have a plurality of actuators such as valves and / or damper actuators to control heating, ventilation, and / or air conditioning. These buildings may also include actuators to set the positions of blinds and other actuators may be intended to switch and dim lights.

In addition to these actuators, sensors such as light sensors, temperature sensors, sensors for measuring particulate matter, and / or presence detectors may be provided. The sensors and the actuators are distributed throughout the various parts of a structure. They typically come with a communication interface and / or with a communication controller to communicate with one another and / or with a central controller. The central controller may be installed on-site. The central controller may also be remote. The central controller may, in particular, be a cloud computer.

The communication interface and / or the communication controller may, for instance, rely on wireless solutions such as WLAN, KNX® RF, and / or Enocean®. Hard-wired solutions such as Ethernet® cables or on KNX® cables are also common. The choice of any particular wireless or hard-wired solution is also influenced by bandwidth requirements. Sensor and / or actuators with video streaming functionality may, for instance, require more bandwidth than other types of field devices.

The sensors and the actuators thus form a network. Ideally, each device of the network can be identified through an address such as a media access control (MAC) address or an internet protocol (IP) address. A central controller may, for instance, rely on direct host configuration and assign addresses to the actuators and / or sensors. The central controller and the actuators and / or sensors then use these addresses and suitable protocols for communication purposes.

Upon completion of installation of various actuators and / or sensors in a building, these devices require commissioning. That is, someone searches the various parts of a building for all the actuators and / or sensors. The commissioner then records their identifications and their locations. The commissioner may, for instance, create a table with device addresses and with device locations.

This known process of commissioning has a number of shortcomings. The commissioner searching for devices may, for instance, miss one of the actuators and / or miss one of the sensors. The commissioner may also spend long hours searching for devices that are not obvious to find. Further, the commissioner may make a mistake in writing down an address of an actuator or of a sensor. All of those issues typically involve cost penalties and / or delays.

The present disclosure improves on the commissioning of commercial, industrial and / or residential structures. The instant disclosure aims at providing a commissioning method that is less prone to personnel error than existing methods.

The patent application US2006/0206291A1 was filed on 11 March 2005 and was published on 14 September 2006. US2006/0206291A1 pertains to commissioning of sensors.

The patent application US2008/0231437A1 was filed on 24 March 2008 and was published on 25 September 2008. US2008/0231437A1 teaches building automation systems and methods.

The patent application US2015/0022374A1 was filed on 12 December 2013 and was published on 22 January 2015. US2015/0022374A1 discloses an actuator based on a sensor actuator network and a method of actuating the same.

## Summary

The present disclosure provides a method and / or a device for commissioning buildings. To that end, a communication network is established among a plurality of sensors and among a plurality of actuators. By establishing a communication network, the sensors and the actuators (each) obtain addresses such that they can be identified. The method and / or the device utilize the sensors of a building such as lighting sensors, presence detectors, thermometers etc and takes readings. The method and / or the device also harness the various actuators such as valve actuators, actuators for blinds, damper actuators etc and obtain settings of these actuators.

The method and / or the device then determine correlations between sensor readings and actuator positions. Ideally, a matrix is established with correlations between each sensor with address i and each actuator with address j. Based on the (maximum) correlations between sensors and actuators, pairs (i, j) of sensors and of actuators are identified. These pairs are elements in the matrix with closest correspondences between sensors and actuators.

The above problems are resolved by a method for commissioning and / or by a device for commissioning in accordance with the main claims of this disclosure. Preferred embodiments of the present disclosure are covered by the dependent claims.

It is a related object of the present disclosure to provide a method for commissioning and / or a device for commissioning wherein the steps of gathering sensor readings and actuator settings are carried out repeatedly in order to determine closest correspondences between sensors and actuators.

It is an object of the present disclosure to provide a method for commissioning and / or a device for commissioning wherein a central computer carries out the calculations involved in identifying pairs of sensors and of actuators.

It is a related object of the present disclosure to provide a method for commissioning and / or a device for commissioning wherein the plurality of sensors and the plurality of actuators receive addresses from the central computer. It is envisaged that the central computer issues addresses that are unique identifiers.

It is another related object of the present disclosure to provide a method for commissioning and / or a device for commissioning wherein the central computer is configured to communicate with the actuators and with the sensors through encrypted channels. It is envisaged that communication between the central computer and the sensors and / or actuators is bidirectional.

It is another related object of the present disclosure to provide a method for commissioning and / or a device for commissioning with a display and / or with a printer where the display and / or the printer delivers information on closest correspondences between actuators and / or sensors to an operator.

It is still another object of the present disclosure to provide a method for commissioning and / or a device for commissioning wherein at least one of the sensors is a thermostat, which could be a smart thermostat.

It is still a related object of the present disclosure to provide method for commissioning and / or a device for commissioning wherein at least one sensor or at least one actuator is configured to estimate its location via a satellite navigation system and / or via (wireless) triangulation.

It is yet another object of the present disclosure to provide a method for commissioning and / or a device for commissioning wherein at least one of the actuators is a valve actuator and / or an actuator for blinds and / or an actuator within a system for heating, ventilation, air conditioning and / or an actuator to dim or switch (artificial) lights.

It is also an object to provide a commercial, industrial and / or residential building with a commissioning device according to the instant disclosure.

It is also an object of the instant disclosure to provide a commercial, industrial and / or residential building with a device for re-commissioning a building after changes have been made to the building.

Brief description of the drawings

Various features will become apparent to those skilled in the art from the following detailed description of the disclosed non-limiting embodiments. The drawing that accompanies the detailed description can be briefly described as follows:

FIG 1 shows a building with a central computer disposed inside the building. The building can be commissioned in accordance with the instant disclosure.

FIG 2 shows a building with a central computer disposed outside the building. The building can be commissioned in accordance with the instant disclosure.

FIG 3 schematically shows a device for commissioning configured to connect to a plurality of actuators and to a plurality of sensors.

Detailed decription

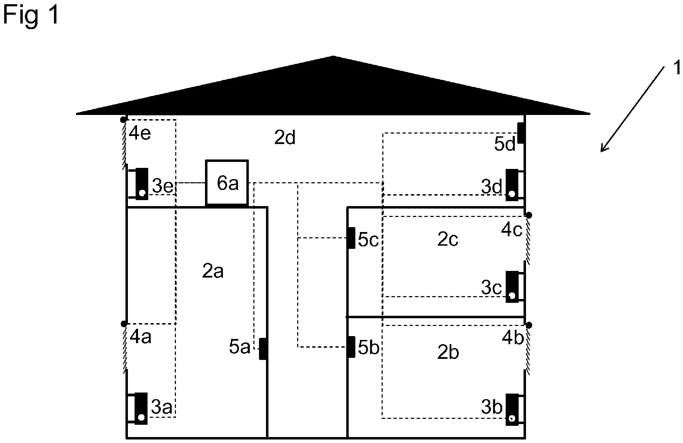

The building 1 as shown on FIG 1 could be any commercial, residential and / or industrial structure. The building 1 comprises a plurality of rooms 2a - 2d. The rooms 2a - 2d of the building 1 come with a number of actuators 3a - 3e, 4a - 4e and also with a number of sensors 5a - 5d. The actuators 3a - 3e as shown on FIG 1 are valve actuators of room heaters or cooling devices or heating and cooling devices such as fan coil units. The actuators 4a - 4e actuate window blinds. Other actuators such as damper actuators for ducts may be employed in the building. They may be commissioned in accordance with the embodiments disclosed herein.

The sensors 5a - 5d are, by way of non-limiting example, thermometers, pressure sensors, humidity sensors, lighting sensors, presence detectors, air quality sensors, sensors for particulate matter or any combination thereof. It is envisaged that the sensors 5a - 5d are provided by a thermostat, in particular by a smart thermostat or by another room unit or by a room device that measures temperature. The sensors 5a - 5d may, by way of another example, also be provided by fire detectors or by alarm units. The sensors 5a - 5d, may actually be part of standard infrastructure such as computers or internet routers with temperature sensors etc.

In a particular embodiment, at least one of the actuators 3a - 3e, 4a - 4e or at least one of the sensors 5a - 5d is operable to estimate and / or to determine its location. To that end, the device 3a - 3e, 4a - 4e, 5a - 5d, may provide a circuit component for satellite navigation such as a global positioning system (GPS). The device 3a - 3e, 4a - 4e, 5a - 5d may also provide a circuit component harnessing another technology for navigation or object location. The device 3a - 3e, 4a - 4e, 5a - 5d may also use a sensor for particulate matter to estimate its location. High levels of particulate matter could, for instance, indicate the device is close to a door or close to a window. In this case, high levels of particulate matter would be due to polluted outdoor air.

In an alternate embodiment, an actuator 3a - 3e, 4a - 4e or a sensor 5a - 5d measures signal strengths of wireless signals. The device 3a - 3e, 4a - 4e, 5a - 5d then uses triangulation to determine its proximity to radio frequency devices nearby. An actuator 3a - 3e, 4a - 4e or a sensor 5a - 5d may, for instance, rely on wireless internet signal strength to obtain an estimate of its location.

The actuators 3a - 3e, 4a - 4e and the sensors 5a - 5d have interfaces in order for them to communicate with a central computer 6. It is envisaged that any communication between the central computer 6a and the actuators 3a - 3e, 4a - 4e and / or sensors 5a - 5d can be bi-directional or uni-directional.

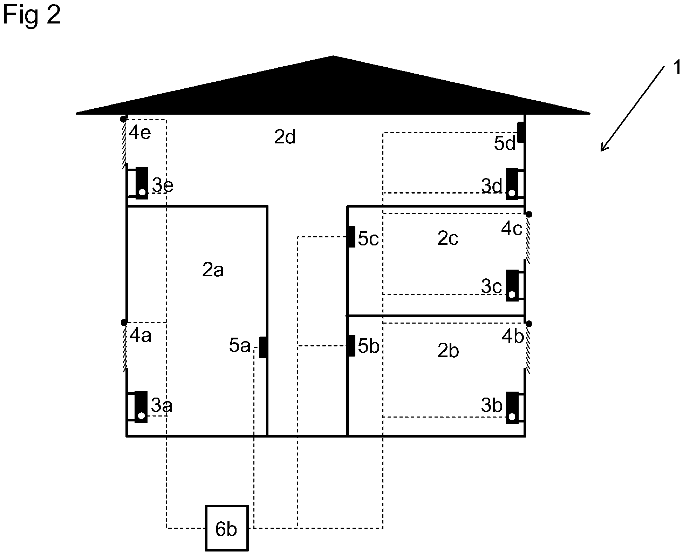

FIG 1 and FIG 2 show dashed lines to indicate communication links between the devices of an installation. It is envisaged that at least one of the links shown on FIG 1 and on FIG 2 employs encryption. It is, in particular, envisaged that some of the actuators 3a - 3e, 4a - 4e and / or some of the sensors 5a - 5d capitalize on a Diffie-Hellman key exchange (or similar) to establish secure connections. In an alternate embodiment, some of the actuators 3a - 3e, 4a - 4e and / or some of the sensors 5a - 5d employ private and public keys of suitable length to establish secure connections.

The communication interface and / or the communication controller may, for instance, rely on wireless solutions such as WLAN, KNX® RF, and / or Enocean®. Hard-wired solutions such as Ethernet® cables or on KNX® cables are also considered. The choice of any particular wireless or hard-wired solution is also influenced by bandwidth requirements. Sensors and / or actuators with video streaming functionality may, for instance, require more bandwidth than other types of field devices.

It is envisaged that the actuators 3a - 3e, 4a - 4e and the sensors 5a - 5d and the central computer 6 all use a common communication protocol. It is envisaged that the devices of an installation rely on a protocol such as KNX®, Modbus, LON or BACnet®. The actuators 3a - 3e, 4a - 4e and the sensors 5a - 5d and the central computer 6 may also rely on a proprietary protocol.

The central computer 6a can be a device inside the building 1. In an alternate embodiment, the central computer 6b is arranged outside the building. The central computer 6b may, in particular, be a cloud computer. In one embodiment, an external central computer 6b may connect to the actuators 3a - 3e, 4a - 4e and to the sensors 5a - 5d via the Internet.

The interface modules of the actuators 3a - 3e, 4a - 4e and of the sensors 5a - 5d typically carry a machine address. The machine address ideally is unique. The central computer 6a, 6b upon discovery of actuators 3a - 3e, 4a - 4e or sensors 5a - 5d assigns a network address to each device 3a - 3e, 4a - 4e, 5a - 5d. The network address is then used to send data packets from the central computer 6a, 6b to an actuator 3a - 3e, 4a - 4e or to a sensor 5a - 5d or vice versa.

In a particular embodiment, the network is a TCP/IP based network. In this embodiment, the central computer 6a, 6b may assign network addresses in accordance with a direct host configuration protocol (DHCP). In an alternate embodiment, the central computer 6a, 6b uses a (static) lookup-up table to map machine addresses to network addresses.

Upon establishment of the network, the central computer 6a, 6b queries (each of) the actuators 3a - 3e, 4a - 4e for its settings. These settings may, for instance, indicate valve positions. They may as well indicate the positions of blinds or shutters. Also, the central computer 6a, 6b queries the sensors 5a - 5d for their readings. The central computer 6a, 6b may use a suitable protocol such as a file transfer protocol or a hypertext transfer protocol to obtain readings from actuator devices 3a - 3e, 4a - 4e and / or from sensor devices 5a - 5d. In one embodiment, the central computer 6a, 6b downloads readings from actuators 3a - 3e, 4a - 4e and / or from sensors 5a - 5d via secure copy.

The central computers for assigning network addresses and for obtaining readings need not be the same. According to a particular embodiment, a first central computer configures the network. A second central computer sees the network as configured by the first unit and gathers readings from actuators 3a - 3e, 4a - 4e and from sensors 5a - 5d.

Once readings have been obtained from the actuators 3a - 3e, 4a - 4e and / or from the sensors 5a - 5d, those readings ideally may be normalized. The step of normalization may be carried out for each actuator 3a - 3e, 4a - 4e and for each sensor 5a - 5d.

In other words, a valve position of a heater or cooler that may be employed in the building 1 varies continuously or in discrete steps between fully closed and fully open. In this case, the fully closed position is normalized to a value of 0 and the fully open is normalized to a value of 1. Any valve position (valve stroke) in between fully closed and fully open is mapped to a value that corresponds to the actual degree of opening of the valve. Suppose a valve is 30% open. The corresponding normalized value then becomes 0.3. Settings of actuators 4a - 4e for blinds are normalized in a similar or in the same fashion.

Likewise, readings from any temperature sensor (e.g. sensor 5a) may be normalized. In one exemplary embodiment, 18 degrees Celsius (291 K) may be the lowest acceptable indoor temperature for a residential building. Also, in this embodiment 28 degrees Celsius (301 K) may be the top end of the acceptable temperature range. An indoor temperature of 18 degrees is then mapped to a normalized value of 0. An indoor temperature of 28 degrees Celsius (301 K) is mapped to a normalized value of 1. A temperature of 25 degrees Celsius (294 K) is mapped to a value of 0.7. Readings from lighting sensors are normalized in a similar fashion or in the same fashion.

Presence detectors (or occupancy sensors) actually deliver readings that differ from the readings of temperature sensors. While temperature sensors yield continuous readings, (infrared) presence detectors either detect or do not detect an individual. There are basically two indications from presence detectors and these are "detected an individual" or "detected no individual". If no individual is detected, the reading from the presence detector will be normalized to 0. The reading obtained from the presence detector will in all other cases be normalized to 1.

The normalized signal from a presence detector may actually lie in between 0 and 1 due to uncertainty. That is, a normalized signal of 0.7 would indicate a 70% probability of someone being present in the vicinity of the presence detector. It is envisaged that values equal to or larger than 0.5 are rounded up. A normalized signal of 0.7 then becomes 1. Likewise, a normalized signal of 0.2 is rounded to 0.

The (normalized) signal may actually comprise a series of values. Suppose temperatures are measured at 6 am in the morning, then at 7 am, at 8 am, and so forth. In one illustrative example, the temperature measurement may be 18 degrees Celsius (291 K) at 6 am, 19 degrees Celsius (292 K) at 7 am, and 20 degrees (293 K) at 8 am. In this embodiment, the central computer 6a, 6b obtains readings every hour. At 8 am the series of normalized values is 0, 0.1, 0.2. The central computer 6a, 6b preferably forms time series of (temperature) measurements with one, two, three, four, eight, sixteen, thirty-two, sixty-four etc values. The central computer 6a, 6b preferably obtains readings every minute, every fifteen minutes, twice per hour, once per hour, every two hours, every four hours, every eight hours, once per day etc. The central computer 6a, 6b obtains settings from actuators 3a - 3e, 4a - 4e in a similar or in the same fashion.

A matrix is then formed with i columns for the sensors and with j rows for the actuators. Alternatively, the matrix comprises i rows of the sensors and j rows for the actuators. The following details assume that i and j are each natural numbers and that the product i · j is equal to or larger than two, preferably the product i · j is equal to or larger than four. Accordingly, the following description assumes at least two sensors and / or at least two actuators.

Pairs are then formed of sensors and of actuators. The number of pairs (i, j) ideally is i · j. Five sensors and four actuators will thus lead to a total of twenty pairs.

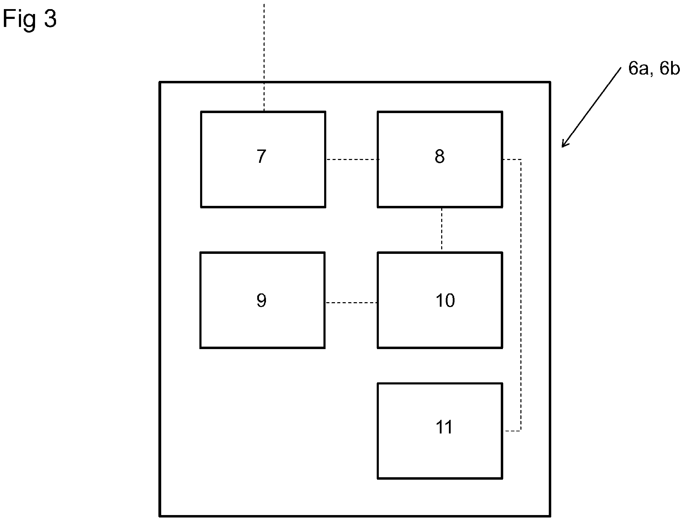

The correlation between the readings obtained from sensor i and the settings obtained from actuator j is then calculated. Correlations are ideally calculated for all pairs (i, j). The central computer 6a, 6b preferably provides a non-volatile memory 9 to store sensor readings, actuator settings and the result of its calculations. As shown in Fig 3, the central computer 6a, 6b preferably also comprises a processing unit 8 for carrying out the above calculations. In addition, the central computer 6a, 6b ideally has a memory controller 10 that connects to the memory.

Correlations $c_{ij}$ are determined by multiplication of entries $i_k$ from the series of readings from sensor i with entries $j_k$ from the series of settings from actuator j. The products $i_k \cdot j_k$ then add up to the correlation $c_{ij}$ as shown in equation (1):

$$c_{ij} = \sum_k i_k \cdot j_k \qquad (1)$$

Applications that involve heating and / or cooling may involve a delay between actuation and measurements. A room heater typically has to provide heat for several minutes before the closest thermometer picks up an increase in temperature. The entry in the series of sensor readings $i_{k+\tau}$ that corresponds to an actuator setting $j_k$ will thus be delayed by some time $\tau$. The correlation between sensor readings and actuator settings thus reads as shown in equation (2)

$$c_{ij} = \sum_k i_{k+\tau} \cdot j_k \qquad (2)$$

According to a particular embodiment, the delay $\tau$ between actuation and the corresponding response from a sensor is estimated by calculation. To that end, the system calculates correlations $c_{ij\tau}$ for certain delays $\tau$, ideally for all delays $\tau$.

$$c_{ij\tau} = \sum_k i_{k+\tau} \cdot j_k$$

The delay $\tau$ between actuation and the corresponding reading then corresponds to the maximum correlation $c_{ij\tau}$, i.e.

$$c_{ij} = \max\left(c_{ij\tau}\right)$$

The correlation matrix is used to identify pairs (i,j) of sensors i and of actuators j that correspond to one another. Based on these identifications, the sensors i of a building are assigned to the actuators j and vice versa. To that end, the system searches amongst the correlations $c_{ij}$ of any given sensor with index i for the actuator j' that maximizes $c_{ij}$. The sensor i then corresponds to the actuator j'.

The system similarly searches amongst the correlations $c_{ij}$ of any given actuator with index j for the sensor i' that maximizes $c_{ij}$. The actuator indexed as j then corresponds to the sensor i'.

According to another embodiment, the system uses the correlation matrix to address uncertainty. The correlations as found by the above algorithm need not always lead to unambiguous results. If two valve actuators and one thermometer are in the same room, the correlations between the settings of the two actuators and the thermometer will be close. It thus makes sense to rank correlations. Let the correlation between actuator 3e and thermometer 5d in room 2d be 0.88. Also, let the correlation between actuator 3d and thermometer 5d in room 2d be 0.96.

The actuator 3d then shows the closest correlation with the thermometer 5d. The actuator 3e shows the second closest correlation with the thermometer 5d.

It is envisaged that the system delivers information to an operator on the closest match between a thermometer 5d and an actuator 3d, and on the second closest match etc.

In other words, the instant disclosure teaches a method for commissioning a structure 1 and / or a device for commissioning a structure 1, wherein the method further comprises the step of sorting pairs of identifiers in ascending sequence by correlation coefficients $c_{ij}$. The instant disclosure also teaches a method for commissioning a structure 1 and / or a device for commissioning a structure 1, wherein information pairs of identifiers sorted in ascending sequence by correlation coefficients $c_{ij}$ is delivered to an operator.

In a particular embodiment, the system and / or the central computer 6a, 6b also provides an output module. The output module visualizes the above correlations and / or assignments of actuators 3a - 3e, 4a - 4e and of sensors 5a - 5d. The output module 11 can, by way of non-limiting example, be a printer and / or a suitable display.

The suitable display 11 could, by way of non-limiting example, be a monochrome display, a grayscale display, or a color screen with suitable resolution. Suitable resolutions include, but are not limited to, 426 x 320 pixels, 470 x 320 pixels, 640 x 480 pixels, or 960 x 720 pixels etc. The display may, for instance, be a liquid crystal screen, a cathode ray tube monitor, or a screen made of organic light-emitting diodes.

It is envisaged that the system and / or the central computer 6a, 6b also comprises a controller for the output module 11 such as a printer controller or a graphics adaptor.

It is further envisaged to use the method and / or the device according to the instant disclosure to commission a fuel cell with a plurality of sensors and with a plurality of actuators. It is still further envisaged to use the method and / or the device according to the instant disclosure to commission a cogeneration plant with a plurality of sensors and with a plurality of actuators.

In other words, the instant disclosure teaches a method for commissioning a structure 1 with a data network and with at least two actuators 3a - 3e, 4a - 4e, each actuator 3a - 3e, 4a - 4e having an identifier and connecting to the data network, and with at least two sensors 5a - 5d, each sensor 5a - 5d having an identifier and connecting to the data network, the method comprising the steps of obtaining via the data network from each of the at least two actuators 3a - 3e, 4a - 4e and from each of the at least two sensors 5a - 5d an identifier; obtaining via the data network from each of the at least two actuators 3a - 3e, 4a - 4e a setting and from each the of at least two sensors 5a - 5d a reading; forming at least two pairs of identifiers, each pair comprising an identifier of an actuator 3a - 3e, 4a - 4e and an identifier of a sensor 5a - 5d; forming for each pair of identifiers a pair of data, each pair of data comprising the setting obtained from the actuator 3a - 3e, 4a - 4e of the corresponding pair of identifiers and the reading obtained from the sensor (5a - 5d) of the corresponding pair of identifiers, thereby establishing a surjective correspondence between pairs of identifiers and pairs of data; determining for each pair of identifiers a correlation coefficient between the actuator setting of the corresponding pair of data and the sensor reading of the corresponding pair of data, thereby establishing a surjective correspondence between pairs of identifiers and correlation coefficients; using said correlation coefficients to identify amongst the pairs of identifiers at least one pair of identifiers with the closest correlation between the corresponding actuator setting and the corresponding sensor reading; assigning the actuator 3a - 3e, 4a - 4e of said most closely correlated pair of identifiers to the sensor 5a - 5d of said most closely correlated pair of identifiers.

The instant disclosure also teaches the aforementioned method, wherein each pair of identifiers differs from all other pairs of identifiers in at least one of an actuator 3a - 3e, 4a - 4e identifier or a sensor 5a - 5d identifier.

The instant disclosure also teaches any of the aforementioned methods, wherein the at least one pair of identifiers with the closest correlation between the corresponding actuator 3a - 3e, 4a - 4e setting and the corresponding sensor 5a - 5d reading is identified by determining the pair of identifiers that corresponds to the largest correlation coefficient.

The instant disclosure also teaches any of the aforementioned methods, wherein each pair of identifiers links an identifier of one of the at least two actuators 3a - 3e, 4a - 4e to an identifier of one of the at least two sensors 5a - 5d.

The instant disclosure also teaches any of the aforementioned methods, wherein the method further comprises the step of normalizing at least one setting obtained from one of the actuators 3a - 3e, 4a - 4e and / or of normalizing at least one reading obtained from one of the sensors 5a - 5d.

The instant disclosure also teaches any of the aforementioned methods, wherein at least one setting obtained from at least one actuator 3a - 3e, 4a - 4e is a valve stroke.

The instant disclosure also teaches any of the aforementioned methods, wherein at least one setting obtained from at least one actuator 3a - 3e, 4a - 4e is a position of a window blind.

The instant disclosure also teaches any of the aforementioned methods, wherein at least one setting obtained from at least one actuator 3a - 3e, 4a - 4e is a position of a shutter.

The instant disclosure also teaches any of the aforementioned methods, wherein at least one setting obtained from at least one actuator 3a - 3e, 4a - 4e is a position of a light switch.

The instant disclosure also teaches any of the aforementioned methods, wherein at least one reading obtained from at least one sensor 5a - 5d is a temperature.

The instant disclosure also teaches any of the aforementioned methods, wherein at least one reading obtained from at least one sensor 5a - 5d is a temperature reading obtained from a thermostat.

The instant disclosure also teaches any of the aforementioned methods, wherein at least one reading obtained from at least one sensor 5a - 5d is a temperature reading obtained from a smart thermostat.

The instant disclosure also teaches any of the aforementioned methods, wherein at least one reading obtained from at least one sensor 5a - 5d is an indication from a presence detector.

The instant disclosure also teaches any of the aforementioned methods, wherein at least one setting obtained from one of the at least two actuators 3a - 3e, 4a - 4e comprises a time history of actuator positions.

The instant disclosure also teaches any of the aforementioned methods, wherein at least one reading obtained from one of the at least two sensors 5a - 5d comprises a time history of sensor measurements.

The instant disclosure also teaches the two aforementioned methods, wherein for at least one pair identifiers a time delay is factored into the determination of a correlation coefficient between the actuator setting of the corresponding pair of data and the sensor reading of the corresponding pair of data.

The instant disclosure also teaches any of the aforementioned methods, wherein the identifiers obtained from each of the at least two actuators 3a - 3e, 4a - 4e and / or the identifiers obtained from each of the at least two sensors 5a - 5d are internet protocol addresses or media access control addresses.

The instant disclosure also teaches any of the aforementioned methods, wherein the structure 1 is a commercial building.

The instant disclosure also teaches any of the aforementioned methods, wherein the structure 1 is an industrial building.

The instant disclosure also teaches any of the aforementioned methods, wherein the structure 1 is a residential building.

The instant disclosure also teaches a device for commissioning a structure 1, the device comprising: a network adaptor 7 configured to establish connections via a data network to at least two actuators 3a - 3e, 4a - 4e and to at least two sensors 5a - 5d; wherein said device is configured to obtain via said connections settings from the connected actuators 3a - 3e, 4a - 4e and is configured to obtain via said connections readings from the connected sensors 5a - 5d; the device also comprising a volatile or non-volatile memory 9 for storing pairs of identifiers, each pair of identifiers comprising an identifier of an actuator 3a - 3e, 4a - 4e and an identifier of a sensor 5a - 5d; the device further comprising a logic circuit 8 configured to determine data correlation coefficients between pairs of actuator 3a - 3e, 4a - 4e settings and of sensor 5a - 5d readings; wherein said volatile or non-volatile memory 8 is also configured to store said correlation coefficients determined by the logic circuit 9; wherein said logic circuit 9 is further configured to identify amongst said pairs of identifiers at least one pair of identifiers with the closest correlation between the corresponding actuator 3a - 3e, 4a - 4e setting and the corresponding sensor 5a - 5d reading; wherein the device for commissioning a structure is designed to carry out the method according to any of aforementioned methods.

The instant disclosure also teaches the aforementioned device, wherein the device further comprises an output module 11 configured to deliver information on at least one assignment between an actuator 3a - 3e, 4a - 4e and a sensor 5a - 5d to an operator.

Any steps of a method according to the present application may be embodied in hardware, in a software module executed by a processor, in a cloud computing arrangement, or in a combination of these. The software may include a firmware, a hardware driver run in the operating system, or an application program. Thus, the invention also relates to a computer program product for performing the operations presented herein. If implemented in software, the functions described may be stored as one or more instructions on a computer-readable medium. Some examples of storage media that may be used include random access memory (RAM), read only memory (ROM), flash memory, EPROM memory, EEPROM memory, registers, a hard disk, a removable disk, other optical disks, or any available media that can be accessed by a computer or any other IT equipment and appliance.

It should be understood that the foregoing relates only to certain embodiments of the invention and that numerous changes may be made therein without departing the scope of the invention as defined by the following claims. It should also be understood that the invention is not restricted to the illustrated embodiments and that various modifications can be made within the scope of the following claims.

Reference numerals

1 building

2a - 2d rooms

3a - 3e valve actuators (of heaters, coolers and coolers/heaters)

4a - 4e actuators for windows, window blinds and lights (switches, dimmers)

5a - 5d sensors

6a central computer inside the building

6b central computer outside the building

7 network adaptor

8 logic circuit

9 memory

10 memory controller

11 output module

**Claims**

1. A method for commissioning a building (1) with a data network and with at least two actuators (3a - 3e, 4a - 4e), each actuator (3a - 4e) having an identifier and connecting to the data network, and with at least two sensors (5a - 5d), each sensor (5a - 5d) having an identifier and connecting to the data network, the method comprising the steps of:

   obtaining via the data network from each of the at least two actuators (3a - 3e, 4a - 4e) and from each of the at least two sensors (5a - 5d) an identifier;
   obtaining via the data network from each of the at least two actuators (3a - 3e, 4a - 4e) a setting and from each the of at least two sensors (5a - 5d) a reading;
   forming at least two pairs of identifiers, each pair comprising an identifier of an actuator (3a - 3e, 4a - 4e) and an identifier of a sensor (5a - 5d);
   forming for each pair of identifiers a pair of data, each pair of data comprising the setting obtained from the actuator (3a - 3e, 4a - 4e) of the corresponding pair of identifiers and the reading obtained from the sensor (5a - 5d) of the corresponding pair of identifiers, thereby establishing a surjective correspondence between pairs of identifiers and pairs of data;
   determining for each pair of identifiers a correlation coefficient between the actuator setting of the corresponding pair of data and the sensor reading of the corresponding pair of data, thereby establishing a surjective correspondence between pairs of identifiers and correlation coefficients;
   using said correlation coefficients to identify amongst the pairs of identifiers at least one pair of identifiers with the closest correlation between the corresponding actuator setting the corresponding sensor reading;
   assigning the actuator (3a - 3e, 4a - 4e) of said most closely correlated pair of identifiers to the sensor (5a - 5d) of said most closely correlated pair of identifiers,

   **characterized in that**
   at least one of the actuators (3a - 3e, 4a - 4e) or at least one of the sensors (5a - 5d) is operable to estimate its location by
   providing a circuit component for satellite navigation or by
   using a sensor for particulate matter or by measuring signal strengths of wireless signals and using triangulation to determine proximity of the at least one of the actuators (3a - 3e, 4a - 4e) or of the at least one of the sensors (5a - 5d) to radio frequency devices nearby.

2. The method according to claim 1, wherein the at least one pair of identifiers with the closest correlation between the corresponding actuator (3a - 3e, 4a - 4e) setting and the corresponding sensor (5a - 5d) reading is identified by determining the pair of identifiers that corresponds to the largest correlation coefficient.

3. The method according to any of the claims 1 to 2, wherein the method further comprises the step of normalizing at least one setting obtained from one of the actuators (3a - 3e, 4a - 4e) and / or of normalizing at least one reading obtained from one of the sensors (5a - 5d).

4. The method according to any of the claims 1 to 3, wherein at least one setting obtained from at least one actuator (3a - 3e, 4a - 4e) is a valve stroke.

5. The method according to any of the claims 1 to 4, wherein at least one reading obtained from at least one sensor (5a - 5d) is a temperature.

6. The method according to any of the claims 1 to 5, wherein at least one reading obtained from at least one sensor (5a - 5d) is an indication from a presence detector.

7. The method according to any of the claims 1 to 6, wherein the identifiers obtained from each of the at least two actuators (3a - 3e, 4a - 4e) and / or the identifiers obtained from each of the at least two sensors (5a - 5d) are internet protocol addresses or media access control addresses.

8. The method according to any of the previous claims, wherein the building (1) is a commercial building.

9. A device for commissioning a building (1), the device comprising:

   a network adaptor (7) configured to establish connections via a data network to at least two actuators (3a - 3e, 4a - 4e) and to at least two sensors (5a - 5d);

wherein said device is configured to obtain via said connections settings from the connected actuators (3a - 3e, 4a - 4e) and is configured to obtain via said connections readings from the connected sensors (5a - 5d);

the device also comprising a volatile or non-volatile memory (9) for storing pairs of identifiers, each pair of identifiers comprising an identifier of an actuator (3a - 3e, 4a - 4e) and an identifier of a sensor (5a - 5d);

the device further comprising a logic circuit (8) configured to determine data correlation coefficients between pairs of actuator (3a - 3e, 4a - 4e) settings and of sensor (5a - 5d) readings;

wherein said volatile or non-volatile memory (8) is also configured to store said correlation coefficients determined by the logic circuit (9);

wherein said logic circuit (9) is further configured to identify amongst said pairs of identifiers at least one pair of identifiers with the closest correlation between the corresponding actuator (3a - 3e, 4a - 4e) setting and the corresponding sensor (5a - 5d) reading;

wherein the device for commissioning a building is designed to carry out the method according to any of the claims 1 to 8.

10. The device according to claim 9, wherein the device further comprises an output module (11) configured to deliver information on at least one assignment between an actuator (3a - 3e, 4a - 4e) and a sensor (5a - 5d) to an operator.

**Patentansprüche**

1. Verfahren zur Inbetriebnahme eines Gebäudes (1) mit einem Datennetzwerk und mit mindestens zwei Aktoren (3a - 3e, 4a - 4e), wobei jeder Aktor (3a - 3e, 4a - 4e) eine Kennung hat und mit dem Datennetzwerk verbunden ist, und mit mindestens zwei Sensoren (5a - 5d), wobei jeder Sensor (5a - 5d) eine Kennung hat und mit dem Datennetzwerk verbunden ist, wobei das Verfahren die folgenden Schritte umfasst:

Erlangen einer Kennung von jedem der mindestens zwei Aktoren (3a - 3e, 4a - 4e) und von jedem der mindestens zwei Sensoren (5a - 5d) über das Datennetzwerk;

Erlangen einer Einstellung von jedem der mindestens zwei Aktoren (3a - 3e, 4a - 4e) und einer Auslesung von jedem der mindestens zwei Sensoren (5a - 5d) über das Datennetzwerk;

Bilden von mindestens zwei Kennungspaaren, wobei jedes Paar eine Kennung eines Aktors (3a - 3e, 4a - 4e) und eine Kennung eines Sensors (5a - 5d) umfasst;

Bilden eines Datenpaars für jedes Kennungspaar, wobei jedes Datenpaar die von dem Aktor (3a - 3e, 4a - 4e) des entsprechenden Kennungspaars erlangte Einstellung und die von dem Sensor (5a - 5d) des entsprechenden Kennungspaars erlangte Auslesung umfasst, wodurch eine surjektive Übereinstimmung zwischen Kennungspaaren und Datenpaaren hergestellt wird;

Bestimmen, für jedes Kennungspaar, eines Korrelationskoeffizienten zwischen der Aktoreinstellung des entsprechenden Datenpaars und der Sensorauslesung des entsprechenden Datenpaars, wodurch eine surjektive Übereinstimmung zwischen Kennungspaaren und Korrelationskoeffizienten hergestellt wird;

Verwenden der Korrelationskoeffizienten, um unter den Kennungspaaren mindestens ein Kennungspaar mit der engsten Korrelation zwischen der entsprechenden Aktoreinstellung und der entsprechenden Sensorauslesung zu identifizieren;

Zuweisen des Aktors (3a - 3e, 4a - 4e) des engsten korrelierten Kennungspaars zu dem Sensor (5a - 5d) des engsten korrelierten Kennungspaars,

**dadurch gekennzeichnet, dass**

mindestens einer der Aktoren (3a - 3e, 4a - 4e) oder mindestens einer der Sensoren (5a - 5d) betriebsfähig ist, um seinen Ort zu schätzen durch

Bereitstellen einer Schaltungskomponente für Satellitennavigation oder durch

Verwenden eines Sensors für Feinstaub oder durch

Messen der Signalstärke von Funksignalen und Verwenden von Triangulation, um die Nähe des mindestens einen der Aktoren (3a - 3e, 4a - 4e) oder des mindestens einen der Sensoren (5a - 5d) zu Hochfrequenzgeräten in der Nähe zu bestimmen.

2. Verfahren nach Anspruch 1, wobei das mindestens eine Kennungspaar mit der engsten Korrelation zwischen der Einstellung des entsprechenden Aktors (3a - 3e, 4a - 4e) und der Auslesung des entsprechenden Sensors (5a - 5d) identifiziert wird, indem das Kennungspaar bestimmt wird, das dem größten Korrelationskoeffizienten entspricht.

3. Verfahren nach einem der Ansprüche 1 bis 2, wobei das Verfahren ferner den Schritt des Normalisierens von mindestens einer von einem der Aktoren (3a - 3e, 4a - 4e) erlangten Einstellung und/oder des Normalisierens von mindestens einer von einem der Sensoren (5a - 5d) erlangten Auslesung umfasst.

4. Verfahren nach einem der Ansprüche 1 bis 3, wobei mindestens eine von mindestens einem Aktor (3a - 3e, 4a - 4e) erlangte Einstellung ein Ventilhub ist.

5. Verfahren nach einem der Ansprüche 1 bis 4, wobei mindestens eine von mindestens einem Sensor (5a - 5d) erlangte Auslesung eine Temperatur ist.

6. Verfahren nach einem der Ansprüche 1 bis 5, wobei mindestens eine von mindestens einem Sensor (5a - 5d) erlangte Auslesung eine Angabe von einem Anwesenheitsdetektor ist.

7. Verfahren nach einem der Ansprüche 1 bis 6, wobei die von jedem der mindestens zwei Aktoren (3a - 3e, 4a - 4e) erlangten Kennungen und/oder die von jedem der mindestens zwei Sensoren (5a - 5d) erlangten Kennungen Internetprotokolladressen oder Media-Access-Control (MAC)-Adressen sind.

8. Verfahren nach einem der vorstehenden Ansprüche, wobei das Gebäude (1) ein Gewerbegebäude ist.

9. Vorrichtung zur Inbetriebnahme eines Gebäudes (1), wobei die Vorrichtung Folgendes umfasst:

einen Netzwerkadapter (7), der konfiguriert ist, um Verbindungen über ein Datennetzwerk zu mindestens zwei Aktoren (3a - 3e, 4a - 4e) und zu mindestens zwei Sensoren (5a - 5d) aufzubauen;
wobei die genannte Vorrichtung konfiguriert ist, um über die Verbindungen Einstellungen von den verbundenen Aktoren (3a - 3e, 4a - 4e) zu erlangen, und konfiguriert ist, um über die Verbindungen Auslesungen von den verbundenen Sensoren (5a - 5d) zu erlangen;
wobei die Vorrichtung auch einen flüchtigen oder nichtflüchtigen Speicher (9) zum Speichern von Kennungspaaren umfasst, wobei jedes Kennungspaar eine Kennung eines Aktors (3a - 3e, 4a - 4e) und eine Kennung eines Sensors (5a - 5d) umfasst;
wobei die Vorrichtung ferner eine Logikschaltung (8) umfasst, die konfiguriert ist, um Datenkorrelationskoeffizienten zwischen Paaren von Einstellungen von Aktoren (3a - 3e, 4a - 4e) und Auslesungen von Sensoren (5a - 5d) zu bestimmen;
wobei der flüchtige oder nicht-flüchtige Speicher (8) auch konfiguriert ist, um durch die Logikschaltung (9) bestimmte Korrelationskoeffizienten zu speichern;
wobei die Logikschaltung (9) ferner konfiguriert ist, um unter den Kennungspaaren mindestens ein Kennungspaar mit der engsten Korrelation zwischen der entsprechenden Einstellung eines Aktors (3a - 3e, 4a - 4e) und der entsprechenden Auslesung eines Sensors (5a - 5d) zu identifizieren;
wobei die Vorrichtung zur Inbetriebnahme eines Gebäudes dafür konzipiert ist, das Verfahren nach einem der Ansprüche 1 bis 8 durchzuführen.

10. Vorrichtung nach Anspruch 9, wobei die Vorrichtung ferner ein Ausgangsmodul (11) umfasst, das konfiguriert ist, um Informationen über mindestens eine Zuweisung zwischen einem Aktor (3a - 3e, 4a - 4e) und einem Sensor (5a - 5d) an einen Bediener zu liefern.

**Revendications**

1. Procédé pour la mise en service d'un bâtiment (1) avec un réseau de données et avec au moins deux actionneurs (3a-3e, 4a-4e), chaque actionneur (3a-3e, 4a-4e) comportant un identifiant et étant connecté au réseau de données, et avec au moins deux capteurs (5a-5d), chaque capteur (5a-5d) comportant un identifiant et étant connecté au réseau de données, le procédé comprenant les étapes constituées par :

l'obtention, via le réseau de données, à partir de chacun des au moins deux actionneurs (3a-3e, 4a-4e) et à partir de chacun des au moins deux capteurs (5a-5d), d'un identifiant ;
l'obtention, via le réseau de données, à partir de chacun des au moins deux actionneurs (3a-3e, 4a-4e), d'un réglage, et à partir de chacun des au moins deux capteurs (5a-5d), d'une lecture ;
la formation d'au moins deux paires d'identifiants, chaque paire comprenant un identifiant d'un actionneur (3a-3e, 4a-4e) et un identifiant d'un capteur (5a-5d) ;
la formation, pour chaque paire d'identifiants, d'une paire de données, chaque paire de données comprenant le réglage qui est obtenu à partir de l'actionneur (3a-3e, 4a-4e) de la paire correspondante d'identifiants et la lecture qui est obtenue à partir du capteur (5a-5d) de la paire correspondante d'identifiants, d'où ainsi l'établissement d'une correspondance surjective entre des paires d'identifiants et des paires de données ;
la détermination, pour chaque paire d'identifiants, d'un coefficient de corrélation entre le réglage d'actionneur de la paire correspondante de données et la lecture de capteur de la paire correspondante de données, d'où ainsi l'établissement d'une correspondance surjective entre des paires d'identifiants et des coefficients de corrélation ;
l'utilisation desdits coefficients de corrélation pour identifier, parmi les paires d'identifiants, au moins une paire d'identifiants qui présente la corrélation la plus forte entre le réglage d'actionneur correspondant et la lecture de capteur correspondante ;

l'assignation de l'actionneur (3a-3e, 4a-4e) de ladite paire d'identifiants corrélée de la façon la plus forte au capteur (5a-5d) de ladite paire d'identifiants corrélée de la façon la plus forte ; **caractérisé en ce que** :

au moins l'un des actionneurs (3a-3e, 4a-4e) ou au moins l'un des capteurs (5a-5d) peut fonctionner pour estimer son emplacement :

en prévoyant un composant de circuit pour une navigation par satellite ou

en utilisant un capteur pour une matière particulaire ou

en mesurant des intensités de signal de signaux sans fil et en utilisant une triangulation pour déterminer une proximité de l'au moins un des actionneurs (3a-3e, 4a-4e) ou de l'au moins un des capteurs (5a-5d) vis-à-vis de dispositifs radiofréquence proches.

2. Procédé selon la revendication 1, dans lequel l'au moins une paire d'identifiants présentant la corrélation la plus forte entre le réglage d'actionneur (3a-3e, 4a-4e) correspondant et la lecture de capteur (5a-5d) correspondante est identifiée en déterminant la paire d'identifiants qui correspond au coefficient de corrélation le plus grand.

3. Procédé selon l'une quelconque des revendications 1 et 2, dans lequel le procédé comprend en outre l'étape constituée par la normalisation d'au moins un réglage qui est obtenu à partir de l'un des actionneurs (3a-3e, 4a-4e) et/ou par la normalisation d'au moins une lecture qui est obtenue à partir de l'un des capteurs (5a-5d).

4. Procédé selon l'une quelconque des revendications 1 à 3, dans lequel au moins un réglage qui est obtenu à partir d'au moins un actionneur (3a-3e, 4a-4e) est une course de soupape.

5. Procédé selon l'une quelconque des revendications 1 à 4, dans lequel au moins une lecture qui est obtenue à partir d'au moins un capteur (5a-5d) est une température.

6. Procédé selon l'une quelconque des revendications 1 à 5, dans lequel au moins une lecture qui est obtenue à partir d'au moins un capteur (5a-5d) est une indication qui provient d'un détecteur de présence.

7. Procédé selon l'une quelconque des revendications 1 à 6, dans lequel les identifiants qui sont obtenus à partir de chacun des au moins deux actionneurs (3a-3e, 4a-4e) et/ou les identifiants qui sont obtenus à partir de chacun des au moins deux capteurs (5a-5d) sont des adresses de protocole Internet ou des adresses de commande d'accès au support.

8. Procédé selon l'une quelconque des revendications qui précèdent, dans lequel le bâtiment (1) est un bâtiment commercial.

9. Dispositif pour la mise en service d'un bâtiment (1), le dispositif comprenant :

un adaptateur de réseau (7) qui est configuré de manière à ce qu'il établisse des connexions via un réseau de données sur au moins deux actionneurs (3a-3e, 4a-4e) et sur au moins deux capteurs (5a-5d) ; dans lequel :

ledit dispositif est configuré de manière à ce qu'il obtienne, via lesdites connexions, des réglages en provenance des actionneurs connectés (3a-3e, 4a-4e) et est configuré de manière à ce qu'il obtienne, via lesdites connexions, des lectures en provenance des capteurs connectés (5a-5d) ;

le dispositif comprenant également une mémoire volatile ou non volatile (9) pour stocker des paires d'identifiants, chaque paire d'identifiants comprenant un identifiant d'un actionneur (3a-3e, 4a-4e) et un identifiant d'un capteur (5a-5d) ;

le dispositif comprenant en outre un circuit logique (8) qui est configuré de manière à ce qu'il détermine des coefficients de corrélation de données entre des paires de réglages d'actionneur (3a-3e, 4a-4e) et de lectures de capteur (5a-5d) ; dans lequel :

ladite mémoire volatile ou non volatile (8) est également configurée de manière à ce qu'elle stocke lesdits coefficients de corrélation qui sont déterminés par le circuit logique (9) ; dans lequel :

ledit circuit logique (9) est en outre configuré de manière à ce qu'il identifie, parmi lesdites paires d'identifiants, au moins une paire d'identifiants qui présente la corrélation la plus forte entre le réglage d'actionneur (3a-3e, 4a-4e) correspondant et la lecture de capteur (5a-5d) correspondante; dans lequel :

le dispositif pour la mise en service d'un bâtiment est conçu de manière à ce qu'il mette en oeuvre le procédé selon l'une quelconque des revendications 1 à 8.

10. Dispositif selon la revendication 9, dans lequel le dispositif comprend en outre un module de sortie (11) qui est configuré de manière à ce qu'il délivre à un opérateur une information portant sur au moins une assignation entre un actionneur (3a-3e, 4a-4e) et un capteur (5a-5d).

Fig 1

Fig 2

Fig 3

6a, 6b

**REFERENCES CITED IN THE DESCRIPTION**

**Patent documents cited in the description**

- US 20060206291 A1
- US 20080231437 A1
- US 20150022374 A1